Europäisches Patentamt

European Patent Office

Office européen des brevets

(11) Veröffentlichungsnummer: **0 218 596**
**B1**

# EUROPÄISCHE PATENTSCHRIFT

(45) Veröffentlichungstag der Patentschrift:
08.11.89

(21) Anmeldenummer: 85904135.2

(22) Anmeldetag: 06.08.85

(86) Internationale Anmeldenummer:
PCT/IT 85/00027

(87) Internationale Veröffentlichungsnummer:
WO 86/01197 (27.02.86 Gazette 86/5)

(51) Int. Cl.⁴: **C 05 F 9/02**

(54) **VERFAHREN ZUR AEROBEN BIOLOGISCHEN UMWANDLUNG VON ORGANISCHEN ABFALLMATERIALIEN.**

(30) Priorität: 07.08.84 IT 4870284

(43) Veröffentlichungstag der Anmeldung:
22.04.87 Patentblatt 87/17

(45) Bekanntmachung des Hinweises auf die Patenterteilung:
08.11.89 Patentblatt 89/45

(84) Benannte Vertragsstaaten:
AT BE CH DE FR GB LI LU NL SE

(56) Entgegenhaltungen:
DE-A- 3 210 655
FR-A- 2 227 245
FR-A- 2 320 922
FR-A- 2 391 164
US-A- 3 357 812

(73) Patentinhaber: SORAIN CECCHINI S.p.A., Via
Campobello, 41, Pomezia I-Rome (IT)

(72) Erfinder: CERRONI, Manlio, Viale Poggio Fiorito, 63,
I-00144 Rome (IT)

(74) Vertreter: Sneider, Massimo, Studio Lenzi Via
Lucania 13, I-00187 Roma (IT)

ACTORUM AG

## Beschreibung

Bekannt sind Umwandlungsprozesse in Kompost, u.zw. in organischen Dünger, aus organischen Ausschussmaterialien, besonders aus vom festen Stadtmüll rückgewonnenen organischen Materialien, aus dem von den Aufbereitungsanlagen der stättischen Abwässer kommenden Schlamm sowie aus den Rückständen der Landwirtschaft- und Viehzuchtbetriebe im allgemeinen.

Diese Prozesse stützen sich im wesentlichen auf drei hauptsächlichen Handlungen, u.zw.: Durchwirbelung der Biomasse, ihre Homogenisierung und ihr automatischer Vorschub mit gleichzeitiger Lufteinführung, um die für die aerobe Zersetzung mittels Mikroorganismen erforderliche Sauerstoffmenge zu erbringen.

Es sind auch viele Anlagen bekannt, welche die drei vorerwähnten hauptsächlichen Funktionen vereinigen, aber diese bekannten Anlagen weisen jeweils Grenzen auf, welche den Wirkungsgrad in Frage stellen.

In der Tat die verschiedenen bekannten Anlagen unterscheiden sich untereinander vorallem durch die für den Transport des Materials angewandten Mittel, welches in Aufbereitungsbecken kontinuierlich oder diskontuierlich gesammt und aus diesen vorzugsweise kontinuierlich entfernt wird, wobei diese Mittel in zwei grundsätzliche Typen gruppiert werden können: jene bestehend aus rotierenden Fräsen, welche in der Masse in Behandlung eingetaucht dieselbe durchwirbeln und sie von der Eintrittsstelle zur Austrittsfrontseite verschieben; jene bestehend aus Rührschrauben, welche unter Kombinierung der Rotationsbewegung mit der Translationsbewegung eine analoge Handlung vollziehen.

Der Grundgedanke dieser zweiten Arbeitsmittel ist es aus einer oder mehreren Gruppen von an einem Gerüstwagen aufgehängtem Schnecken gebildet zu sein, welche letztere Orthogonal oder gegenüber der Ebene des Beckens leicht geneigt angeordnet sind. Die Schnecken werden in Drehung versetzt, und mit ihrer translatorischen Bewegung längs des Gerüstwagens kombiniert mit ihrer achsialen Rotation schieben sie das Material von der Ladefrontseite zur Austrittsfrontseite. Die Bewegung aller Schnecken erfolgt in den angegebenen Richtungen und Sinnen. Beim passiven Lauf, d.h. beim Rücklauf der Schnecken von der Auslasseite zur Ladeseite, sind die Schnecken aus der Masse in Behandlung herausgezogen. Derartige Systeme sind z.B. im schwedischen Patent Nr. 7 306 001-4 (eingereicht am 27.4.1973 unter dem Namen Johnson Construction Company AB) beschrieben.

Die vorerwähnten Systeme unter besonderer Bezugnahme auf die Schnecken anwendenten Systeme weisen verschiedene Übelstände auf, u.zw.:

— die Leistung auf dem Spiel ist hoch, da der Vorschub des Materials durch den Schub der Schnecken gegen die Masse erfolgt und nicht durch den Transport von denselben längs der Achse der Schnecken selbst;

— die Beanspruchungen am Stab der Schnecke sind beträchtlich zumal es sich hierbei um einige Meter vollkomen auskragende Organe handelt, und die Kräfte übertragen sich auf die gesamte Struktur des Gerüstwagens mit den relativen Problemen der Überdimensionierung und der inneren Vibrationen;

— infolge der hohen Leistung und der grossen Kräfte auf dem Spiel ergibt sich ein intensiver Verschleiss der Rührschnecken.

Aus den vorstehenden Anführungen ergibt sich, dass für die Schicht des zu behandelnden Materials strenge Grenzen gesetzt sind, da die Leistungen mit dieser Schicht exponential zunehmen.

Es ist Aufgabe der vorliegenden Erfindung ein Verfahren zu schaffen, welches die vorbeklagten Übelstände vermeidet und die nachstehenden Vorteile zeitigt:

— die Möglichkeit von theoretisch unbegrenzten Materialschichten, insofern die Leistungszunahme propertional und nicht exponential ist;

— verringerte Oberflächen und Zivilbauwerke zur Ablagerung des Materials durch die Zunahme der Schicht des Materials in Behandlung;

— sehr eingeschränkte Verbräuche bei Schichtgleichheit auch um 50% vermindert;

— verringerter Verschleiss der Schnecken im gleichen Verhältnis der Leistungen;

— verringerte Belastungen der mechanischen Organe und Schwingungs- bzw. Vibrationslosigkeit;

— die Möglichkeit die Schicht des Materials in Behandlung konstant zu halten durch Ausgleich des Volumenverlustes, welcher sind während des biologischen Prozesses sei es durch chemische Einwirkung (Verdunstung, Bildung von $CO_2$, usw.) sei es durch physikale Einwirkung (Zerbröckeln der groben Teile und dergleichen) einstellt.

Der Erfindungsgedanke, auf den sich das erfindungsgemässe Verfahren stützt, besteht darin, dass der aktive Lauf, bzw. Hunb der Schnecken von der Austrittsseite her zur Ladeseite hin erfolgt, d.h. im Gegenteil zur gegenwärtigen Praxis wirken die Schnecken auf das Material in Behandlung ein, während sie sich längs des Gerüstwagens von der Austrittsseite zur Ladeseite verschieben. Das bedeutet, dass das Material nicht mehr durch Schub, sondern durch einen richtigen Transport verschoben wird, welcher am unteren Ende der Schnecke beginnt, das Material längs derselben hochsteigen lässt und am oberen Teil endet. Bei einer Zunahme der Materialschicht in Behandlung nimmt die für den Betrieb der Anlage erforderliche Leistung ersichtlicherweise proportional zu. Anderseits sind auch die zur Achse der Schnecken transversalen Kräfte äusserst begrenzt, insofern die Beanspruchung im wesentlichen achsial ist.

Bei Anwendung des vorgenannten Erfindungsgedankens wird das Material von unten nach oben vermengt und zugleich mit einer Bewegung umgekehrten Sinnes zwischen Schnecken und Material gegen die Austrittsseite hin verschoben.

Da weiters der Verschub des Materials umso höher ist je grösser die Neigung der Schnecken gegenüber der Vertikalen ist, ändern die Schnecken erfindungsgemäss ihre Neigung während ihres Arbeitshubes, u.zw. während sie von der Auslasseite zur Ladeseite des Beckens vorwärtsschreiten. Diese Neigung nimmt insbesondere während des Vorschubes der Schnecken gegenüber der Vertikalen zu. Da sich die Schnecken infolge der Zunahme des Neigungswinkels gegenüber der Vertikalen mit ihrem Ende vom Boden entfernen würden, gleichen sie diese Entfernung durch stufenweise Absenkung aus, derart um den Abstand ihrer Enden vom Boden konstant zu halten. Es wird somit der weitere Vorteil erzielt die Schicht des Materials in Behandlung konstant zu halten, insofern die Menge des aus dem Becken abgeführten Materials geringer gehalten ist als die eingebrachte Menge. Daraus ergibt sich, dass das Becken ein grösseres Fassungsvermögen haben wird und somit bei Verweilszeitgleichheit und Materialmengengleichheit eine weitaus verringerte Oberfläche aufweist.

Das erfindungsgemässe Verfahren zur aeroben biologischen Umwandlung von organischen Abfallmaterialien wird anhand der nachstehenden Beschreibung einer in der anliegenden Zeichnung im Längsschnitt schematisch dargestellten zur Durchführung des Verfahrens besonders geeigneten Anlage besser zu verstehen sein.

Bezugsnehmend auf die anliegende Zeichnung ist mit dem Bezugszeichen 1 das Becken der Biomasse 2 angegeben, welche vorzugsweise kontinuierlich von einem Förderband 3 oder einem gleichwertigen Mittel zugespeist wird.

Das Becken 1 ist von einem Gerüstwagen 5 überbrückt, an dem eine oder mehrere jeweils mit zwei komplementären Bewegungen ausgestattete Schnecken 6 angebracht sind, d.h. mit einer Drehbewegung um die eigene Achse und mit einer translatorischen Bewegung längs des Gerüstwagens 5 von einer Wand des Beckens oder Digestors 1 zur anderen. Der Gerüstwagen 5 ist seinerseits mit einer intermittierenden translatorischen Bewegung längs der Längsachse des digestors 1 ausgestattet, derart um die Bearbeitung des Materials in aufeinanderfolgenden Querstreifen zu gestatten, derart um somit eine zweckdienliche und angemessene Länge des Beckens zu ermöglichen.

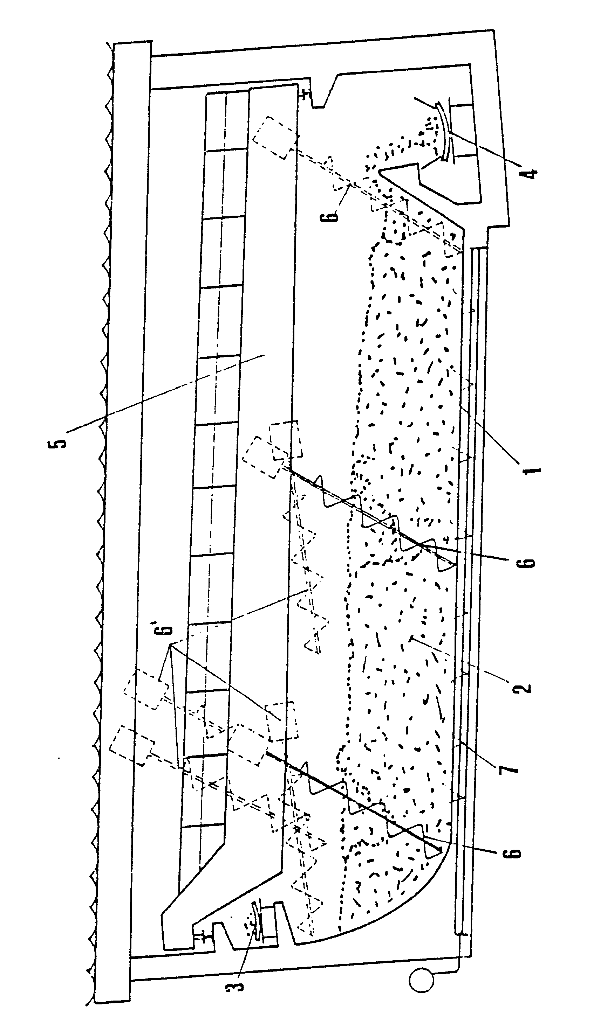

Der aktive Hub der Schnecken 6 stellt sich bei deren Verschiebung längs des Gerüstwagens 5 von der Auslasseite (in der Zeichnung mit dem Förderer 4 angegeben) zur Ladeseite (in der Zeichnung mit dem Förderer 3 angegeben) ein.

Bei der Rückkehrphase, d.h. auf dem Weg vom Förderer 3 zum Förderer 4, sind die Schnecken 6 aus der Masse 2 mittels eines beliebigen geeigneten Systems z.B. durch Drehung gegenüber dem Gerüstwagen oder durch Anhebung, usw., wie gestrichelt mit 6' angedeutet, herausgezogen.

In Abhängigkeit vom Fassungsvermögen der Anlage sind die Schnecken 6 vorzugsweise mehr als eine, in der Längsrichtung des Beckens 1 Seite an Seite gestellt.

Weiters ist es möglich mehrere in der Längsrichtung des Gerüstwagens 5 angeordnete Schnecken 6 vorzusehen, so dass jede von diesen, oder jede Gruppe von diesen, nur einen Teil der Länge des Beckens 1 durchlaufen muss, indem somit die Bearbeitungszeiten jedes einzelnen Digestorstreifens verringert werden.

Es ist hervorzuheben, dass die Schnecken 6 erfindungsgemäss gegenüber der Vertikalen z.B. von 10 bis 60° zweckdienlich geneigt sind, u.zw. um die von den Schnecken 6 vollzogene Transportbewegung zu erleichtern, indem gleichzeitig die erforderliche Energie und die mechanischen Abnützungen verringert werden.

Wie in der Zeichnung schematisch gezeigt ist die Anlage durch Lufteinblasemittel oder Luftansaugmittel 7 für die Zufuhr des für die Aktivität der aeroben Bakterien erforderlichen Sauerstoffes ergänzt, sowie durch Mittel zur Zuführung der Schlämme und/oder der Rückwässer von Reinigungsanlagen städtischer Wässer usw.

Wie vorstehend bereits erwähnt wird noch auf die Höhenverminderung der Schicht des Materials in Behandlung hingewiesen, eine Verminderung welche durch eine Zunahme des Neigungswinkels der Achse der Schnecken 6 gegenüber der Vertikalen ausgeglichen wird, und somit durch Abladung bei 4 einer geringeren Materialmenge als jene an der Ladeseite 3 des Beckens eingeladene Materialmenge, indem die Schnecken 6 z.B. mittels ihrer Senkung längs des Gerüstwagens 5 den Abstand ihrer freien Enden vom Boden unverändert bewahren.

In der Zeichnung ist der Boden des Beckens gegenüber der Waagrechten geneigt eingezeichnet, aber der Umstand ist nicht ausschlaggebend, eine gewisse Neigung ist jedoch bevorzugt für eine Verlagerung der Abwässer von der Ladezone, wo das Material feuchter ist, zur Auslasszone, wo das Material bereits teilweise entwässert ist.

Das erfindungsgemässe Verfahren zur aeroben biologischen Umwandlung von organischen Abfallmaterialien wurde vorstehend anhand eines nicht einzuschränkenden Ausführungsbeispieles beschrieben und erläutert. So wären noch alle jene Varianten möglich, welche sich bei der Herstellung und praktischen Anwendung als nützlich erweisen sollten ohne damit vom Rahmen der Erfindung selbst abzuweichen.

**Patentansprüche**

1. Verfahren zur aeroben biologischen Umwandlung von organischen Abfallmaterialien, bei dem Rührschrauben (6) die Durchwirbelung und den Vorschub des Materials in Behandlung (2) vollbringen, dadurch gekennzeichnet, dass die Rührschrauben (6) in der Biomasse (2) eingetaucht sind, und somit aktiv wirken, wenn sie sich in umgekehrter Richtung zur Verschiebungsrichtung des Materials (2) selbst verschieben, während sie beim Hub in gegenteiliger Richtung, d.h. bei mit der Bewegung des Materials (2) zusammenfallender Richtung, aus der Biomasse (2) herausgezogen sind, dass die Achse der Rührschrauben (6) gegenüber der Vertikalen um einen angemessenen Winkel, vorzugsweise zwischen 10 und 60°, geneigt ist und dass das Material (2) verschoben wird zum Auslass (4) durch die Verschiebung zur Ladezone (3) hin und durch die gleichzeitige Drehung um deren eigene Achse der geneigten und in Heberichtung der Biomasse (2) rotierenden Schnecken (6).

2. Verfahren, nach Anspruch 1, dadurch gekennzeichnet, dass die Dickenänderung des Materials (2) an der Auslasseite (4) gegenüber der Dicke an der Ladeseite (3) durch die Extraktion einer geringeren digerierten Materialmenge als die eingegebene Frischmaterialmenge ausgeglichen wird.

3. Verfahren, nach Anspruch 1, dadurch gekennzeichnet, dass die Schnecken (6) während ihres Arbeitshubes, bzw. aktiven Laufes, ihre Neigung allmählich ändern, indem der mit der Vertikalen gebildete Winkel vergrössert wird, und sich dabei gleichzeitig gegenüber dem Gerüstwagen (5) absenken, um damit den Abstand ihrer freien Enden vom Boden des beckens (1) konstant zu halten.

4. Verfahren, nach Anspruch 1, dadurch gekennzeichnet, dass in das Becken (1) mit waagrechtem oder beliebig geneigtem Boden durch Ansaugen oder durch Einblasen Luft eingebracht wird zwecks Zufuhr des für die Abwicklung der Reaktionen erforderlichen Sauerstoffes.

## Claims

1. Biological-aerobic transformation process of organic waste materials-during wich agitator screws (6) agitate and cause the advancing of the material (2) characterized by the fact that the agitator screws (6) are immersed into the biomass (2) and therefore work actively, when they move inversely to the direction of the material itself; (When they move in the opposite way, they are extracted out of the biomass); by the fact that the axis of the agitator screws is inclined at the right angle, between 10 and 60 degrees, with respect to the vertical line; and by the fact that the material (2) is shifted towards the refuse tip (4) by the moving toward the loading area (3) and by the simultaneous rotation of the inclined cochleas, around their axes, rotating in the direction of the raising of the biomass (2).

2. It is a process, according to claim 1 characterized by the fact that the difference in the thickness of materials (2) in the refuse tip (4) an in the loading area (3) is counter balanced by the extraction of a quantity of assimilated material inferior to the quantity of the fresh material which is introduced.

3. It is a process, according to claim 1 characterized by the fact that the cochleas (6) during their active phase, change gradually their inclination increasing the angle with vertical line, and simultaneously lower with respect to the bridge (5), as to maintain constant the distance between their extremities and the bottom of the basin (1).

4. It is a process, according to claim 1 characterized by the fact that in the basin (1) with horizontal or inclined bottom, is inserted, by aspiration or insufflation a quantity of air necessary to the developping or reactions.

## Revendications

1. Procédé de transformation biologique aérobique de matières organiques de rebut, dans lequel des vis agitatrices (6) assurent l'agitation et l'avancement de la matière en cours de traitement (2), caractérisé par le fait que les vis agitatrices (6) sont immergées dans la biomasse (2), et donc travaillent activement, lorsqu'elles se déplacement en sens contraire au sens de déplacement de la matière, tandis que dans la course en sens opposé, c'est-à-dire dans le sens du mouvement de la matière (2), elles sont extraites de la biomasse, que l'axe des vis agitatrices (6) est incliné d'un angle approprié, et de préférence entre 10 et 60 degrés, par rapport à la verticale, et que la matière (2) est déplacée vers la vidange (4) par le déplacement vers la zone de chargement (3) et par la rotation simultanée autour de leur axe des vis d'Archimède (6) inclinées et tournant dans le sens de soulèvement de la biomasse (2).

2. Procédé, selon la revendication 1, caractérisé par le fait que la variation d'épaisseur de la matière (2) sur le côté de la vidange (4) par rapport à l'épaisseur sur le côté de chargement (3) est compensée par l'extraction d'une quantité de matière digérée inférieure à la quantité de matière fraîche introduite.

3. Procédé, selon la revendication 1, caractérisé par le fait que les vis d'Archimède (6) pendant leur course de travail ou active, varient progressivement leur inclinaison, augmentant l'angle formé avec la verticale, et s'abaissent simultanément par rapport au pont (5), afin d'entretenir constante la distance entre leurs extrémités libres et le fond du bassin (1).

4. Procédé, selon la revendication 1, caractérisé par le fait que dans le bassin (1), à fond horizontal ou incliné, est introduit de l'air, par aspiration ou par insufflation, pour fournir l'oxygène nécessaire au déroulement des réactions.

EP 0 218 596 B1